# EUROPEAN PATENT APPLICATION

(11) **EP 2 677 170 A1**
(43) Date of publication of application: **25.12.2013**
(21) Application number: 12747196.9
(22) Date of filing: 09.02.2012
(51) Int. Cl.: F03D 11/00, F03D 1/06

(54) **BLADE-ROOT-FORMING PIECE FOR WIND TURBINE BLADE, BLADE ROOT STRUCTURE FOR WIND TURBINE BLADE USING SAME, WIND TURBINE BLADE, WIND TURBINE AND METHOD FOR PRODUCING WIND TURBINE BLADE**

(30) Priority: 18.02.2011 JP 2011033922
(71) Applicant: Mitsubishi Heavy Industries, Ltd., Tokyo 108-8215 (JP)
(72) Inventor: SHINDO, Kentaro, Tokyo 108-8215 (JP); HIRANO, Toshiyuki, Tokyo 108-8215 (JP); KAWASETSU, Nozomu, Tokyo 108-8215 (JP)
(74) Representative: Intès, Didier Gérard André
(86) International application number: PCT/JP2012/052935
(87) International publication number: WO 2012/111518

(57) **Abstract**

A blade-root forming piece 10 is provided with an embedded metal 12 including a nut part having a hole with an internal thread 13 formed therein, and a protrusion 12B protruding from the nut part 12A in a circumferential direction of the blade root, a core member 14 disposed adjacent to the protrusion 12B on a blade tip side of the wind turbine blade, and a FRP-wound layer 16 formed by a unidirectional fiber prepreg layered around the protrusion 12 and the core member 14 and hardened.

## Description

### [Technical Field]

The present invention relates to a blade-root forming piece a plurality of which form a blade root of a wind turbine blade, and a blade root structure for the wind turbine blade, the wind turbine blade, a wind turbine and a manufacturing method of the wind turbine blade, that use the blade-root forming piece.

### BACKGROUND ART

In recent years, from a perspective of preserving the environment, wind turbine generators have come into wide use as a power-generating facility which uses wind power in a form of renewable energy.

A wind turbine as a power-generating facility is generally configured such that a blade receiving wind thereon is supported by a hub and this hub is coupled to a main shaft. The motion energy of the wind is converted into rotational energy of a rotor (a rotary part including the blade, hub and the main shaft) and then the rotational energy of the rotor is converted into electric power by a generator.

A large wind turbine as a power-generating facility is desired from the perspective of improving the power generation efficiency, which results in increase of the blade length. It is important to firmly connect the blade to the hub. For instance, in a T-head bolt type, a column nut is inserted in a through hole formed in a blade root of a blade and a T-head bolt for fastening is screwed into the column nut, or in an embedded-metal type, a metal having a hole with an internal thread is embedded in the blade root and a fastening bolt is screwed into the embedded metal. The T-head bolt type and the embedded-metal type are described below in details.

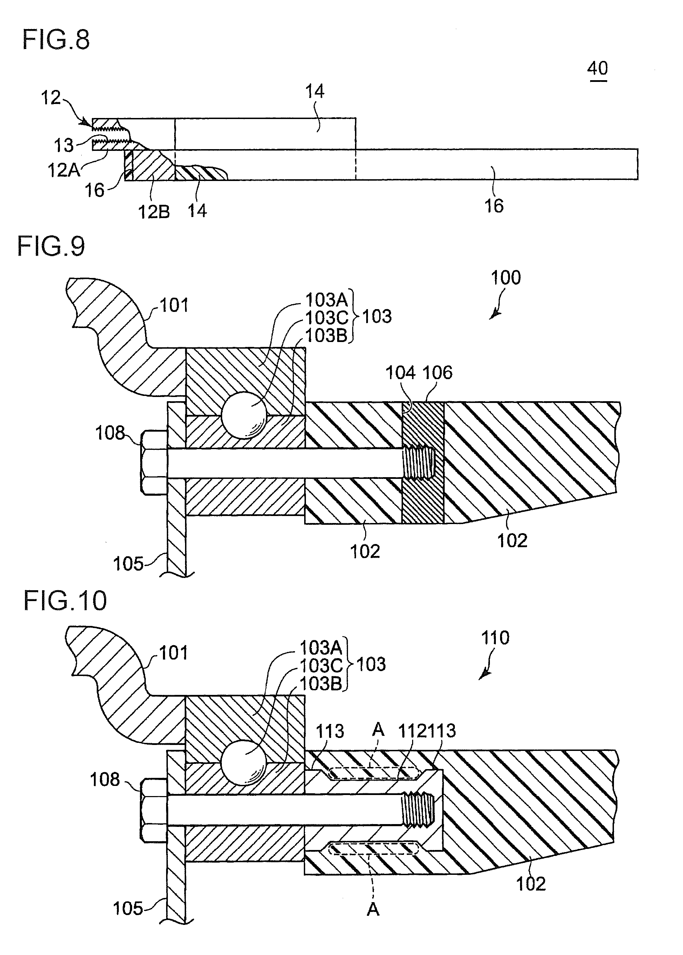

FIG.9 is a cross-sectional view of a blade root structure of the T-head bolt type. In the blade root structure 100 illustrated in the drawing, a through-hole 104 is formed in a fiber-reinforced plastic (FRP) 102 which forms a blade root part. In this through-hole 104, the column nut 106 is inserted. Then, the T-head bolt 108 for fastening the blade root part of the blade to the hub side is screwed into the column nut 106. As a result, the blade root part is fixed to an inner race 103B of a bearing 10 and a top panel 105 arranged to cover an opening of a hub 101, whereas the hub 101 is fixed to an outer race 103a of the bearing 103 with a bolt (not shown). In the bearing 103, a rolling member 103C is provided between the outer race 103A and the inner race 103B. The blade is supported rotatably by the bearing 103 to the hub 101.

FIG.10 is a cross-sectional view of a blade root structure of the embedded-metal type. In the blade root structure 110 illustrated in the drawing, a dog-bone shaped metal 112 is embedded when FRP 102 which forms the blade root part is being molded. The metal 112 has a large diameter part 113 on each end. The metal 112 is prevented from coming loose from the blade root part mainly by sheer strength of FRP 102 in region A between the large diameter parts 113. Further, an internal thread is formed in the metal 112 so that a T-head bolt 108 for fastening the blade root part to the top panel 105 and the inner race 103 is screwed into the metal 112. As a result, the blade root part of the blade is fixed to the hub side.

Disclosed in Patent Literature 1 is a blade root structure as an improved embedded metal type, in which the embedded metal has studs installed thereto in the blade root part. In this blade structure, the studs function as an anchor to prevent the metal from coming out from the blade root part more effectively.

### [Citation List]

### [Patent Literature]

[PTL 1]
   JP 2003-293935 A

### SUMMARY

### [Technical Problem]

The T-head bolt type blade root structure and the embedded metal type blade root structure have the following disadvantages.

The T-head bolt type blade root structure is lighter than the embedded-metal type blade root structure and the column nut 106 is less likely to come out from the blade root part. However, in some cases relaxation (contraction deformation) of the fiber reinforced plastic 102 occurs between the column nut 106 and the inner race 103B, which weakens fastening power of the T-head bolt 108. Further, as there are a plurality of through-holes 104 are provided in the blade root part, it is inevitable to increase the thickness of the fiber reinforced plastic 102 to compensate for strength decrease of the blade root part. Furthermore, it takes significant time to form the plurality of through-holes 104 in the blade root part and also if there was an error or failure in machining to make the through-holes, the blade has to be disposed and this generates an issue of high cost.

On the other hand, in the embedded-metal type blade root structure, the metal 112 is used and thus there is no issue of decline in the fastening power of the bolt caused by relaxation of the reinforced fiber plastic 102. However, the anchorage strength of the blade root part and the hub in the embedded-metal type relies on the shear strength of the fiber reinforced plastic 102 in the region A between the large diameter parts 113. Thus, it is necessary to have a certain distance between the large diameter parts 113. This results in weight increase of the metal 112 and also weight increase of the blade. Further, when delamiation occurs in the fiber reinforced plastic in the region A between the large diameter parts 113, the metal 112 may come out. Furthermore, the fiber reinforced plastic 102 inevitably has enough thickness so that the metal 112 having the large diameter parts 113 can be embedded therein.

In view of the above recent situations that blades are increasingly getting large, it is clearly more important to improve the strength of the blade root than to reduce the weight of the blade. Therefore, a new blade root structure which overcomes the above disadvantages is desired.

In the blade root structure described in Patent Literature, the studs are provided to function as the anchor to the metal embedded in the blade root part. This anchoring method does not rely on shear strength of the fiber reinforced plastic and thus it is possible to effectively prevent the metal from coming out. However, the blade root part has to have enough thickness so that the metal having the studs installed upright thereto can be embedded in the blade root part. Further, the metal has to have enough length to secure enough are of contact between the metal having the studs installed upright and the blade root part. This increases the weight of the metal.

In view of the above issues, it is an object of the present invention to provide a blade-root forming piece for a wind turbine blade, and a blade root structure of the wind turbine blade, the wind turbine blade, a wind turbine and a manufacturing method of the wind turbine blade with use of the blade-root forming piece, which require no machining to make holes in the blade root part and by which the thickness and weight of the wind turbine root can be reduced without decreasing the anchorage strength of the blade root part and the hub.

### [Means to solve the issue]

A blade-root forming piece, according to the present invention, for a wind turbine blade, a plurality of the blade-root forming pieces together forming a cylindrical blade root of the wind turbine blade, comprises:
an embedded metal including a nut part having a hole in which an internal thread is formed, and a protrusion protruding from the nut part in a circumferential direction of the blade root;
a core member which is disposed adjacent to the protrusion on a blade tip side of the wind turbine blade; and
a FRP-wound layer which is formed by a unidirectional fiber prepreg layered around the protrusion and the core member and hardened.

In the blade root of the wind turbine blade formed by the plurality of blade-root forming pieces, the FRP-wound layer is caught by the protrusion of the embedded metal to support tensile load acting on the blade root, and the core member provided adjacent to the blade tip side of the protrusion of the embedded metal supports compression load acting on the blade root. Herein, the FRP-wound layer is formed by layering the unidirectional fiber prepreg around the protrusion and the core member and hardening the unidirectional fiber prepreg. As the fiber is continuous (without being cut), the FRP-wound layer attains high tensile strength. Because of this, even when a large centrifugal force impinges on the wind turbine blade, the blade root of the wind turbine blade can be firmly supported to the hub. Thus, even in the case where the blade root has comparatively small thickness, sufficient strength can be attained.
Further, the embedded metal having the hole with the internal thread therein is used. Thus, unlike the case of the T-head bolt type, there is no decrease of the bolt fastening force resulting from relaxation of the fiber reinforced plastic. Furthermore, unlike the embedded type which prevents the metal from coming out from the blade root part by the shear strength of the fiber reinforced plastic between the large diameter parts, the embedded metal is surely prevented from coming out from the blade root part by the FRP-wound layer surrounding the protrusion of the embedded metal. Therefore, this causes no decrease of the anchorage strength between the blade root of the wind turbine blade and the hub.
Furthermore, the embedded metal only needs to be large enough so that the bolt can be screwed to the nut part and that the unidirectional fiber prepreg can be layered around protrusion. Thus, the size of the embedded metal can be reduced. Moreover, to secure compression strength, the core member is provided separately from the embedded metal. Thus, it is possible to further reduce the size of the embedded metal, thereby reducing the weight of the blade root of the wind turbine blade.
As it is not necessary to form in the blade root the through-holes that were provided in the case of T-head bolt type, it is now possible to save significant time and labor for making holes which causes disposal of the wind turbine blade in case there was an error or failure in making the through-holes in the blade.

In the above blade-root forming piece, the protrusion may protrude from both sides of the nut part in the circumferential direction of the blade root. Further, fibers of the unidirectional fiber prepreg may be arranged along a winding direction of the unidirectional fiber prepreg around the protrusion and the core member.

A blade root structure of a wind turbine blade according to the present invention comprises:
an annular member formed by a plurality of the above-described blade-root forming pieces, the plurality of the blade-root forming pieces joining into an annular shape; and
a FRP layer formed on an inner circumferential side and an outer circumferential side of the annular member by filament winding.

By forming the FRP layer on the inner and outer circumferential sides of the annular member which is formed by the plurality of the blade-root forming pieces joining into an annular shape, the blade-root forming pieces are integrated with each other so as to improve strength as the overall blade root structure.
Further, according to the blade root structure of the present invention, as each of the blade-root forming pieces which form the blade root structure has the above-described structure, the blade root can be smaller in thickness, there is no decline in the anchorage strength of the blade root and the hub, the blade root can be lighter, and also it is no longer necessary to form holes in the blade root when attaching the wind turbine blade to the hub.

A wind turbine blade according to the present invention may be formed by the above-described blade root structure and an outer shell attached to the blade root structure.

According to the blade root structure of the present invention, as each of the blade-root forming pieces which form the blade root structure has the above-described structure, the blade root can be thinner, there is no decline in the anchorage strength of the blade root and the hub, the blade root can be lighter, and also it is no longer necessary to form holes in the blade root when attaching the wind turbine blade to the hub.

A wind turbine according to the present invention comprises:
a wind turbine blade formed by attaching an outer shell to the above-described blade root structure;
a hub to which the wind turbine blade is mounted,
wherein the wind turbine blade and the hub are fixed to each other with a bolt which is screwed into the nut part of the embedded metal of the wind turbine blade.

According to the wind turbine of the present invention, as each of the blade-root forming pieces which form the blade root structure has the above-described structure, the blade root can be reduced in thickness, there is no decrease in the anchorage strength of the blade root and the hub, the blade root can be reduced in weight, and it is no longer necessary to form holes in the blade root when attaching the wind turbine blade to the hub.

A manufacturing method, according to the present invention, of a wind turbine blade which includes a cylindrical blade root formed by a plurality of blade-root forming pieces, comprises the steps of:
forming a first FRP layer on an outer circumferential surface of a cylindrical mandrel by filament winding;
producing a blade-root forming piece by winding a unidirectional fiber prepreg around a protrusion formed on an embedded metal and a core member and hardening the unidirectional fiber prepreg, the embedded metal including a nut part having a hole in which an internal thread is formed and the protrusion protruding from the nut part in a circumferential direction of the blade root, the core member being disposed adjacent to the protrusion on a blade tip side of the wind turbine blade;
forming an annular member by arranging the plurality of blade-root forming pieces and joining the plurality of the blade-root forming pieces into an annular shape;
fitting the annular member to an outer circumference of the mandrel on which the first FRP layer is formed;
forming a second FRP layer by filament winding on an outer circumferential surface of the annular member which is fitted to the mandrel;
removing from the mandrel the annular member whose inner circumferential surface is covered by the first FRP layer and whose outer circumferential surface is covered by the second FRP layer; and
attaching the annular member removed from the mandrel to an outer shell.

According to the above manufacturing method of the wind turbine blade, it is possible to manufacture the wind turbine blade in which the blade root is thin, there is no decline in the anchorage strength of the blade root and the hub, the blade root is light, and there is no need to make holes in the blade root when attaching the wind turbine blade to the hub.

### [Advantageous Effects]

According to the present invention, the blade-root forming piece is formed by the embedded metal including a nut part and a protrusion protruding from the nut part in the circumferential direction of the blade root, the core member disposed adjacent to the protrusion on the blade tip side of the wind turbine blade, and the FRP-wound layer formed by the unidirectional fiber prepreg layered around the protrusion and the core member and hardened. Thus, the blade root of the wind turbine blade can be smaller in thickness, there is no decline in the anchorage strength of the blade root and the hub, the blade root is lighter, and there is no need for machining to make holes in the blade root when attaching the wind turbine blade to the hub.

### BRIEF DESCRIPTION OF DRAWINGS

[FIG.1] FIG.1 is a perspective view of a configuration example of a wind turbine blade.
[FIG.2] FIG.2 is a plan view of a configuration example of a blade-root forming piece, partially in cross section.
[FIG.3] FIG.3 is a side view, partially in cross section, taken from a direction of arrow B of FIG.2.
[FIG.4] FIG.4 is a perspective view of a configuration example of an embedded metal and a core member of the blade-root forming piece.
[FIG.5] FIG.5 is a perspective view of the blade root part formed by the blade-root forming piece.
[FIG.6] FIG.6 is a cross-sectional view taken alone line C-C of FIG.5.
[FIG.7] FIG.7 illustrates a manufacturing process of a wind turbine blade.
[FIG.8] FIG.8 is a plan view of a configuration example of a blade-root forming piece according to a modification example, partially in cross section.
[FIG.9] FIG.9 is a cross-sectional view of a blade root structure of a T-head bolt type.
[FIG.10] FIG.10 is a cross-sectional view of a blade root structure of an embedded-metal type.

### DETAILED DESCRIPTION

Embodiments of the present invention will now be described in detail with reference to the accompanying drawings. It is intended, however, that unless particularly specified in these embodiments, dimensions, materials, shape, its relative positions and the like shall be interpreted as illustrative only and not limitative of the scope of the present invention.

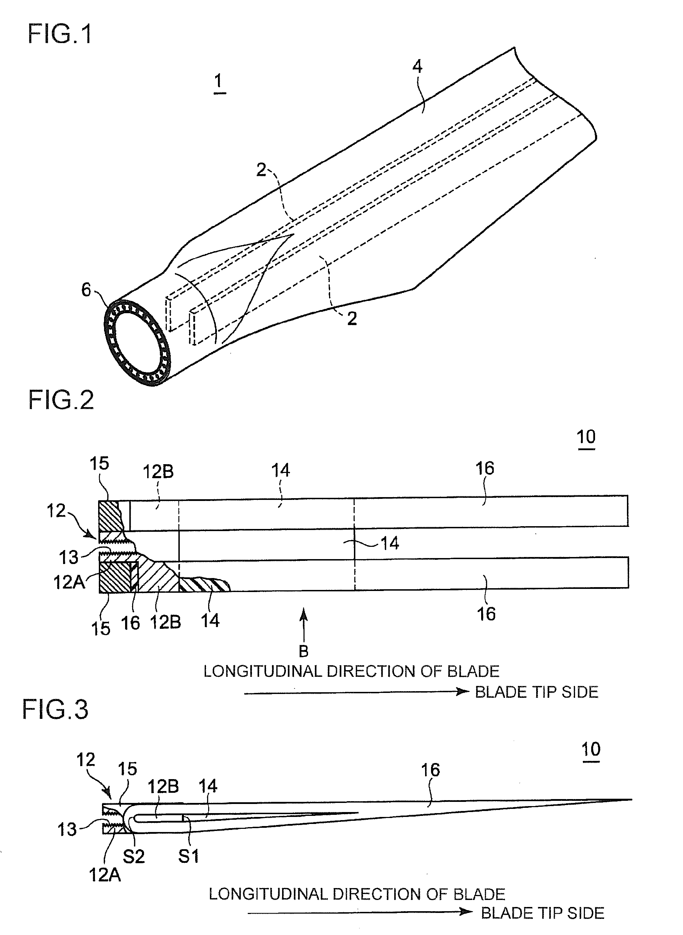

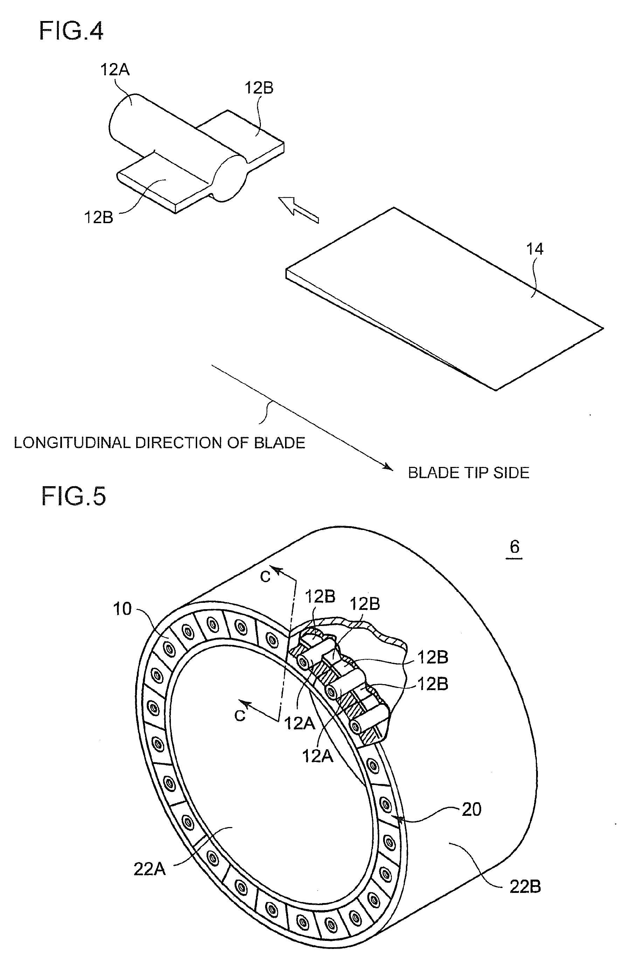

FIG.1 is a perspective view of a configuration example of a wind turbine blade. FIG.2 is a plan view of a configuration example of a blade-root forming piece, partially in cross section. FIG.3 is a side view, partially in cross section, taken from a direction of arrow B of FIG.2. FIG.4 is a perspective view of a configuration example of an embedded metal and a core member of the blade-root forming piece.
Indicated in FIG.2 to FIG.4 are a longitudinal direction and a blade tip side of the wind turbine blade in the case where a plurality of the blade-root forming pieces are assembled to form the blade root of the wind turbine blade, for the purpose of clarifying location of each of the blade-root forming pieces with respect to the overall blade root of the wind turbine blade. Further, the blade tip side is a side that is nearer to a tip of the wind turbine blade and the blade root of the wind turbine blade is fixed to the hub on an opposite side of the blade tip side.

As illustrated in FIG.1, the wind turbine blade 1 includes main spars 2, an outer shell 4 covering the main spars 2, and a blade root part 6 which is a connection part of the wind turbine blade 1 to a hub (not shown). The blade root part 6 is formed into a cylindrical shape and is fitted to an end of the outer shell 4 and fixed thereto with an adhesive. Further, the main spars 2 are fixed to an inner circumferential surface of the blade root part with an adhesive.

The blade root part 6 is formed by the blade-root forming pieces 10 illustrated in FIG.2 and FIG.3. The blade-root forming piece 10 includes an embedded metal 12, a core member 14, a block 15 and a FRP-wound layer 16.

The embedded metal 12 includes a nut part 12A having a hole in which an internal thread 13 is formed and a protrusion 12B protruding from the nut part 12A. In the cases illustrated in FIG.2 to FIG.4, the protrusions 12B protrude in both directions from both sides of the outer circumferential surface of the cylindrical nut part 12A. The internal thread 13 may be formed in a part of the inner circumferential surface or the entire inner circumferential surface of the nut part 12A.
Further, as illustrated in FIG.3, the protrusion 12B has a flat surface S1 on the blade tip side (the surface contacting the core member 14) and a semicircular surface S2 on the other side. As the blade tip side surface S1 of the protrusion 12b is flat, it is possible to effectively transfer stress with a small area. As a result, production costs of the embedded metal and the core member can be reduced thanks to the simple shape. Furthermore, as the surface S2 of the protrusion 12B on the opposite side of the blade tip side has a semicircular shape, it is made easy to layer around the protrusion 12B a unidirectional fiber prepreg which is described later.

The core member 14 is made of material which has necessary and sufficient strength such as FRP and steel. The core member 14 adjoins the protrusion 12B of the embedded metal 12 on the blade tip side of the wind turbine blade. In the cases illustrated in FIG.2 to FIG.4, one common core member 14 is provided to a pair of protrusions 12b protruding from both sides of the nut part 12A. More specifically, the core member 14 extends along a protruding direction of the protrusions 12B from a tip of one protrusion 12B to a tip of the other protrusion 12B.
The core member 14 together with the protrusion 12B defines the shape of the blade root part 6. Thus, the shape of the core member 14 may be appropriately adjusted to attain a desired shape of the blade root part 6.

The FRP-wound layer 16 is provided to surround the protrusion 12B of the embedded metal 12 and the core member 14. The FRP-wound layer 16 is formed by layering a unidirectional fiber prepreg around the protrusion 12B and the core member 14 and then hardening this unidirectional fiber prepreg. In this process, the unidirectional fiber prepreg is layered around the protrusion 12b and the core member 14 along a fiber direction of the unidirectional fiber prepreg. The FRP-wound layer 16 obtained in this manner has high tensile strength as the FRP-wound layer 16 continues in the winding direction of the unidirectional fiber prepreg (the longitudinal direction of the wind turbine blade) without fibers being cut along the way.
A pair of blocks 15 is provided so that the nut part 12A is disposed between the pair of blocks 15. The pair of blocks 15 adjoins the FRP-wound layer 16 on the blade root side of the wind turbine blade. The block 15 is formed of material that has necessary and sufficient strength such as FRP and steel.

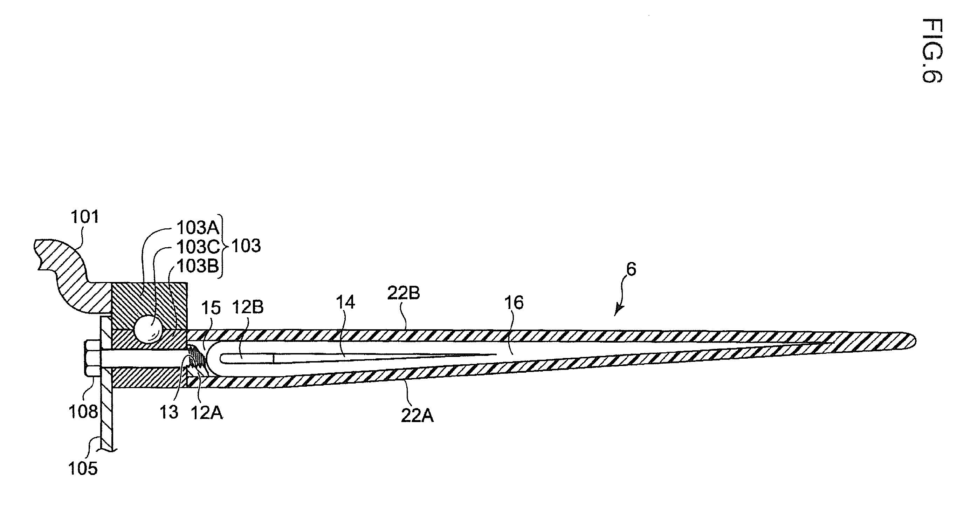

FIG.5 is a perspective view of the blade root part formed by the blade-root forming piece 10. FIG.6 is a cross-sectional view taken alone line C-C of FIG.5. In FIG.6, a hub 101 to which the blade root part 6 is fixed and a bolt 108 are also shown for convenience of explanation.

As illustrated in FIG.5, the blade root part 6 is configured such that a plurality of the blade-root forming pieces 10 join into an annular shape to form an annular member 20 and a FRP layer 22 (22A, 22B) is provided on inner and outer circumferential sides of the annular member 20. The FRP layer 22 (22A, 22B) is formed by filament winding. Further, the process of assembling the blade root part 6 using the blade-root forming pieces 10 is described later.

As illustrated in FIG.6, the bolt 108 is screwed into the nut part 12A of the embedded metal 12 thereby engaging the external threads of the bolt 108 with the internal threads 13 of the nut part 12A. The hub 101 is fixed to the outer race 103A of the bearing 103 with a bolt (not shown). The rolling member 103C is provided in the bearing 103 between the outer race 103A and the inner race 103B. The blade is rotatably supported by the bearing 103 to the hub 101.

In the blade root part 6 having the above structure, the FRP-wound layer 16 is caught by the protrusion 12B of the embedded metal 12 to support tensile load acting on the blade root part 6, and the core member 14 and the block 15 provided adjacent to the blade tip side of the protrusion 12B of the embedded metal 12 support compression load acting on the blade root part 6. The core member 14 and the block 15 may be made of steel, FRP or material that has necessary and sufficient strength. Herein, the FRP-wound layer 16 is formed by the unidirectional fiber prepreg layered and hardened around the protrusion 12B and the core member 14 and the fiber is continuous (without being cut) and thus FRP-wound layer 16 attains high tensile strength. Because of this, even when a large centrifugal force impinges on the wind turbine blade 1, the blade root part 6 of the wind turbine blade 1 can be firmly supported to the hub 101. Thus, even in the case where the blade root part 6 has comparatively small thickness, sufficient strength can be attained. In fact, results of strength calculation performed by inventors of the present invention show that in the wind turbine blade having a blade length of 45 meters, the thickness of the blade root part 6 having the above structure can be reduced about 40% compared to the blade root part of the conventional blade root structure of the T-head bolt type or the embedded-metal type.
Further, the embedded metal 12 having the hole with the internal thread 13 formed therein is used. Thus, this cases no decrease of the bolt fastening force resulting from relaxation of the fiber reinforced plastic unlike the case of the T-head bolt type. Furthermore, unlike the embedded type which prevents the metal from coming out from the blade root part by the shear strength of the fiber reinforced plastic between the large diameter parts, the embedded metal 12 is surely prevented from coming out from the blade root part by the FRP-wound layer 16 surrounding the protrusion 12B of the embedded metal 12. Therefore, this causes no decrease of the anchorage strength between the blade root part 6 of the wind turbine blade 1 and the hub 101.
Furthermore, the embedded metal 12 only needs to be large enough so that the bolt 108 can be screwed to the nut part 12A and that the unidirectional fiber prepreg can be layered around protrusion 12B. Thus, the size of the embedded metal 12 can be reduced. Moreover, to secure compression strength, the core member 14 and the block 15 are provided separately from the embedded metal 12. Thus, it is possible to further reduce the size of the embedded metal 12, thereby reducing the weight of the blade root part 6 of the wind turbine blade 1.
As it is not necessary to form in the blade root the through-holes that were provided in the case of T-head bolt type, it is possible to save significant time and labor for making holes which causes disposal of the wind turbine blade in case there was an error or failure in making the through-holes in the blade.

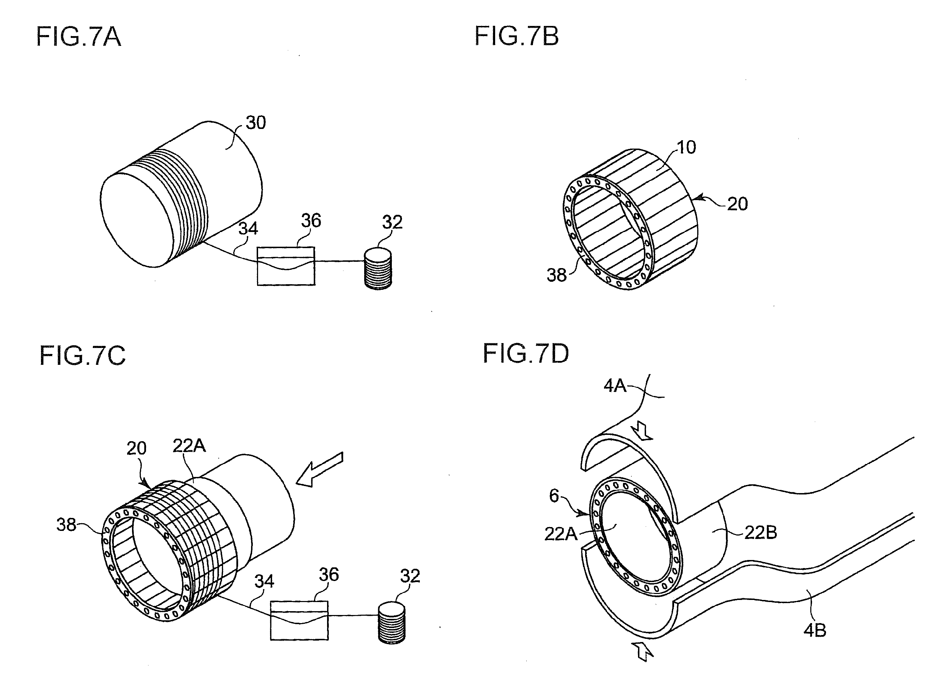

Next, the manufacturing method of the wind turbine blade 1 is explained. FIG.7A to FIG.7D illustrates the process of manufacturing the wind turbine blade 1.

First, as shown in FIG.7A, a first FRP layer 22A (see FIG.7C) is formed on an outer circumferential surface of a cylindrical mandrel 30 by filament winding. More specifically, filaments 34 supplied from a bobbin are immersed in a resin bath 36 and then wound around the outer circumference of the mandrel 30 to form the first FRP layer 22A.

As illustrated in FIG.7B, the annular member 20 formed by a plurality of the blade-root forming pieces 10 (see FIG.2 and FIG.3) joining together is temporally fixed together by a temporarily-fixing jig 38. Further, each of the blade-root forming pieces 10 can be obtained, as described above, by winding the unidirectional fiber prepreg around the protrusion 12B formed on the embedded metal 12 and the core member 14 disposed adjacent to the protrusion 12B on the blade tip side and then hardening the unidirectional fiber prepreg.

Next, as illustrated in FIG.7C, the annular member 20 which is temporarily fixed by the temporarily-fixing jig 38 is fitted to the outer circumferential surface of the mandrel 30 on which the first FRP layer 22A is formed. Then, a second FRP layer 22B is formed on an outer circumferential surface of the annular member 20 by filament winding. The second FRP layer 22B is formed by immersing the filament 34 supplied from the bobbin 32 in the resin bath 36 and then winding the impregnated filament 34 on the outer circumferential surface of the annular member 20.
As a result, obtained is the blade root part 6 (see FIG.5) provided with the FRP layers 22 (22A, 22B) on the outer and inner circumferential sides of the annular member 20 formed by a plurality of the blade-root forming pieces 10.

Finally, the blade root part 6 obtained in the above manner is removed from the mandrel 30 and then as illustrated in FIG.7B, the outer shell 4 (4A, 4B) of a double-split structure composed of a pressure side part and a suction side part is fixed to the blade root part 6 with adhesive.

While the embodiments of the present invention have been described, it is obvious to those skilled in the art that various changes may be made without departing from the scope of the invention.

For instance, in the above embodiments, the protrusion 12B protrudes from both sides of the outer circumferential surface of the nut part 12A. However, this is not limitative and the protrusion 12B may be provided only on one side of the nut part 12A.
FIG.8 is a plan view, partially in cross section, of a configuration example of the blade-root forming piece having the protrusion 12B protruding from only one side of the nut part 12A. As illustrated in this drawing, the blade-root forming piece 40 is provided with the protrusion 12B protruding from one side of the outer circumferential surface of the cylindrical nut part 12A. The core member 14 has width corresponding to the nut part 12A and the protrusion 12B of the embedded metal 12. Further, the FRP-wound layer 16 is provided to surround the protrusion 12B and the core member 14.
As the protrusion 12B and the FRP-wound layer 16 are provided only on one side of the nut part 12A, formation of the FRP-wound layer 16 takes only one time (a step of layering the unidirectional fiber prepreg around the protrusion 12B and the core member 14). Therefore, it is easier to produce the blade-root forming piece 40 than the blade-root forming piece 10. Further, by making the height of the protrusion 12B (the width of the FRP-wound layer 16) twice of that of the blade-root forming piece 10, it is possible form the blade root part 6 by the same number of the blade-root forming pieces 40 as the case of using the blade-root forming piece 10.

## Claims

1. A blade-root forming piece for a wind turbine blade, a plurality of the blade-root forming pieces together forming a cylindrical blade root of the wind turbine blade, the blade-root forming piece comprising:
an embedded metal including a nut part having a hole in which an internal thread is formed, and a protrusion protruding from the nut part in a circumferential direction of the blade root;
a core member which is disposed adjacent to the protrusion on a blade tip side of the wind turbine blade; and
a FRP-wound layer which is formed by a unidirectional fiber prepreg layered around the protrusion and the core member and hardened.

2. The blade-root forming piece for the wind turbine blade, according to claim 1,
wherein the protrusion protrudes from both sides of the nut part in the circumferential direction of the blade root.

3. The blade-root forming piece for the wind turbine blade, according to claim 1 or 2,
wherein fibers of the unidirectional fiber prepreg are arranged along a winding direction of the unidirectional fiber prepreg around the protrusion and the core member.

4. A blade root structure of a wind turbine blade, comprising:
an annular member formed by a plurality of the blade-root forming pieces of any one of claims 1 to 3, the plurality of the blade-root forming pieces joining into an annular shape; and
a FRP layer formed on an inner circumferential side and an outer circumferential side of the annular member by filament winding.

5. A wind turbine blade,
wherein the wind turbine blade is formed by the blade root structure of claim 4 and an outer shell attached to the blade root structure.

6. A wind turbine comprising:
a wind turbine blade formed by attaching an outer shell to the blade root structure of claim 4;
a hub to which the wind turbine blade is mounted,
wherein the wind turbine blade and the hub are fixed to each other with a bolt which is screwed into the nut part of the embedded metal of the wind turbine blade.

7. A manufacturing method of a wind turbine blade which includes a cylindrical blade root formed by a plurality of blade-root forming pieces, the method comprising the steps of:
forming a first FRP layer on an outer circumferential surface of a cylindrical mandrel by filament winding;
producing a blade-root forming piece by winding a unidirectional fiber prepreg around a protrusion formed on an embedded metal and a core member and hardening the unidirectional fiber prepreg, the embedded metal including a nut part having a hole in which an internal thread is formed and the protrusion protruding from the nut part in a circumferential direction of the blade root, the core member being disposed adjacent to the protrusion on a blade tip side of the wind turbine blade;
forming an annular member by arranging the plurality of blade-root forming pieces and joining the plurality of the blade-root forming pieces into an annular shape;
fitting the annular member to an outer circumference of the mandrel on which the first FRP layer is formed;
forming a second FRP layer by filament winding on an outer circumferential surface of the annular member which is fitted to the mandrel;
removing from the mandrel the annular member whose inner circumferential surface is covered by the first FRP layer and whose outer circumferential surface is covered by the second FRP layer; and
attaching the annular member removed from the mandrel to an outer shell.
